(19) Europäisches Patentamt
European Patent Office
Office européen des brevets

(11) **EP 2 803 043 B1**

(12) **EUROPEAN PATENT SPECIFICATION**

(45) Date of publication and mention
of the grant of the patent:
**04.04.2018 Bulletin 2018/14**

(21) Application number: **13735726.5**

(22) Date of filing: **14.01.2013**

(51) Int Cl.:
*G06T 17/00* [(2006.01)]

(86) International application number:
**PCT/IB2013/050330**

(87) International publication number:
**WO 2013/105074 (18.07.2013 Gazette 2013/29)**

(54) **3-D SURFACE-BASED WAVEFORM INVERSION**

WELLENFORMINVERSION AUF BASIS VON 3D-OBERFLÄCHEN

INVERSION DE FORME D'ONDE BASÉE SUR SURFACE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2012 US 201261586326 P**

(43) Date of publication of application:
**19.11.2014 Bulletin 2014/47**

(73) Proprietor: **Geco Technology B.V.
2586 BJ S'Gravenhage (NL)**

(72) Inventor: **HOBRO, James William Douglas
Cambridge
Cambridgeshire CB3 0EL (GB)**

(74) Representative: **Schlumberger Cambridge
Research Limited
High Cross
Madingley Road
Cambridge CB3 0EL (GB)**

(56) References cited:
US-A1- 2004 201 585    US-A1- 2005 143 923
US-A1- 2009 006 053    US-A1- 2009 083 006
US-A1- 2011 090 760    US-A1- 2011 131 020
US-A1- 2011 292 761    US-B1- 6 502 037

- VIGH D ET AL: "3D prestack plane-wave,
full-waveform inversion", GEOPHYSICS,
SOCIETY OF EXPLORATION GEOPHYSICISTS,
US, vol. 73, no. 5, sup, 1 September 2008
(2008-09-01), pages VE135-VE144, XP001516163,
ISSN: 0016-8033, DOI: 10.1190/1.2952623
- CAREY BUNKS ET AL: "Multiscale seismic
waveform inversion", GEOPHYSICS, vol. 60, no.
5, 1 September 1995 (1995-09-01), pages
1457-1473, XP055226224, US ISSN: 0016-8033,
DOI: 10.1190/1.1443880
- A. ABUBAKAR ET AL: "Three-dimensional
seismic full-waveform inversion using the
finite-difference contrast source inversion
method", GEOPHYSICAL PROSPECTING, 22
March 2011 (2011-03-22), pages no-no,
XP055225529, ISSN: 0016-8025, DOI:
10.1111/j.1365-2478.2011.00953.x

EP 2 803 043 B1

**Description**

BACKGROUND

This disclosure relates to three-dimensional (3-D) property model building. In particular, but not by way of limitation, this disclosure relates to methods of building a 3-D model representing 3-D structures using 3-D surface-based waveform inversion.

In many industries in which unknown 3-D structures are under investigation, 3-D models are built based on various measurements made about the unknown structures. The 3-D models may contain various physical properties of the structures. Based on the physical properties of the structures under investigation, different types of measurements, often based on wave phenomena, may be used. In exploration for oil and gas, seismic waves or electromagnetic waves are often used. Similarly, in biomedical fields, ultrasound or electromagnetic waves are used.

For simplicity, the examples used in this disclosure are seismic waves. In these examples, wave phenomena are used to investigate an unknown 3-D structure in the Earth's subsurface. A seismic survey may involve deploying seismic sources and seismic sensors at predetermined locations. These sources generate seismic waves, which propagate into geological formations creating pressure changes and vibrations (seismic waves) along the way. Changes in elastic properties of the geological formation scatter the seismic waves, changing the direction of propagation and other properties of the seismic waves. In a seismic survey, part of the energy emitted by the seismic sources reaches the seismic sensors. Some seismic sensors are sensitive to pressure changes (*e.g.,* hydrophones); other seismic sensors are sensitive to particle motion (*e.g.,* geophones). Seismic surveys may deploy one type of sensors or a combination of both types of sensors. In response to the detected seismic events, the seismic sensors generate seismic measurements (or seismic data), generally, in the form of electrical signals. Analysis of the seismic data may indicate the presence or absence of probable locations of hydrocarbon deposits.

One of the goals of the seismic survey is to build a 3-D image of a survey area for the purpose of identifying subterranean geological formations. Subsequent analysis of the representation may reveal probable locations of hydrocarbon deposits in subterranean geological formations.

Seismic depth images, seismic velocity models or Earth structure models may be constructed from the acquired and processed seismic data. Velocity model building is typically a complex process, beginning with classical velocity analysis, structural model construction from interpreted horizons, and reflection tomography. Velocity models built using these methods generally contain a mixture of smoothly-varying regions, separated by structural features at which discontinuities occur in the seismic property field.

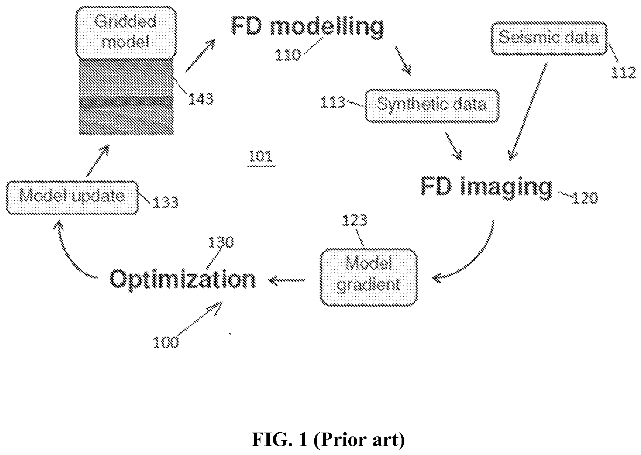

Inversion or full waveform inversion ("FWI") in particular provides a powerful mechanism for refining these seismic velocity models to resolve high-resolution structures. Figure 1 illustrates a prior art FWI workflow 100. A finite difference model (FD model) is initially made and synthetic data 113 are created from such a model. The synthetic data 113 are combined with real seismic data 112 in an FD imaging process 120, from which model gradients 123 are computed. The model gradients 123 are used for optimization process 130 which is used/applied to minimize the misfit between the synthetic data and the real seismic data, with the goal of reducing the misfit between the model and the real Earth substructure. The optimization process 130 results in an update 133 to the model, which is a gridded model 143 suitable for FD modeling 110. Then, a new iteration of FWI may begin. The iterative process or loop 101, which includes FD modeling 110, FD imaging 120, and optimization 130 will continue until the model converges.

FWI can resolve a structure at a much higher resolution than ray-based tomography can since the detailed behavior of waveforms is modeled in addition to the kinematic properties of the wavefield. This high-resolution information can also provide useful constraints on rock properties.

The design of a FWI scheme centers on a forward modeling method and its linearization with respect to perturbations to the model. When FWI is applied to complex, heterogeneous 2-D or 3-D models, a finite-difference method is typically used for forward modeling. Finite-difference methods operate on a gridded representation of the model, and this is the representation that is typically used in the inversion scheme as the model is refined.

FWI has been described in, for example, Vigh D et al, "3D prestack plane-wave, full-waveform inversion", Geophysics, vol. 73, no. 5, pages VE135 to VE144, 2008, which provides a general description of waveform inversion (see pages 136 to 137).

However, many models used in FWI contain complex bodies (such as salt intrusions) whose seismic properties are significantly different from those of the surrounding medium. The boundaries of these bodies form surfaces with complex topography that mark large, sharp contrasts in seismic properties. These surfaces are extremely difficult to refine with FWI when they are represented implicitly within a gridded model. Even a small shift in the position of a boundary with a large seismic impedance contrast requires large updates to the seismic velocity model. For large contrasts these updates violate the assumptions of the Born approximation, which provides the foundation for the linear inversion methods typically used in FWI. This introduces errors into the model update at each inversion step which can reduce the rate of convergence and, in some cases, destabilize the inversion entirely.

To improve convergence during inversion, constraints may be applied to each model update. Constraints may be based on *a priori* expectations about model resolution or geological knowledge. They may also be obtained from non-seismic data types. In order to stabilize convergence of the model near surfaces it may be necessary to apply constraints (*e.g.* for coherence or smoothness) directly to the boundary.

It is desirable to find a way to be able to refine surfaces in the model for FWI more efficiently, to increase the stability and to improve the convergence of the inversion process.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

This disclosure relates to a method that improves inversion of a 3-D property model, in which a 3-D structural model containing an explicit representation of boundary surfaces is built to represent a 3-D structure and an apparatus according to claim 13 to execute this method. The method and apparatus map inversion model updates for gridded property parameters to updates regarding the position and shape of surfaces that delineate contrasts within a 3-D gridded model. 3-D intersection geometry is used to obtain the linear relationships required to perform this mapping. Because of the explicit surface representation, constraints can be applied directly to the position and shape of the surface as it evolves during inversion. This direct inversion for structural features can also account for complementary data types (*e.g.* seismic and electromagnetic data) in a joint inversion. The link between structural and gridded models allows ray-based constraints from tomography to be incorporated directly as constraints in inversion to increase the stability and improve the convergence of the inversion process.

BRIEF DESCRIPTION OF DRAWINGS

Embodiments of this disclosure are described with reference to the following figures. The same numbers are used throughout the figures to reference like features and components. A better understanding of the methods or apparatuses can be had when the following detailed description of the several embodiments is considered in conjunction with the following drawings, in which:

Figure 1 illustrates a prior art work flow for full waveform inversion in a seismic survey;

Figure 2 illustrates a work flow for full waveform inversion, in accordance with an embodiment of the present invention;

Figures 3 illustrates a velocity model containing smoothly-varying regions separated by a surface of discontinuity and the finite difference model parameter grid to which the model must be converted, in accordance with an embodiment of the present invention;

Figure 4 illustrates an example of a cell geometry region-boundary solution and the application of its linearization, in accordance with an embodiment of the present invention;

Figure 5 illustrates the 14 patterns according to Lorensen & Cline, which can be used in embodiments of the present invention;

Figure 6 illustrates a flow diagram of a method in accordance with an embodiment of the present invention; and

Figure 7 illustrates a schematic view of a computer system for implementing methods in accordance with an embodiment of the present invention.

DETAILED DESCRIPTION

Reference will now be made in detail to embodiments, examples of which are illustrated in the accompanying drawings and figures. In the following detailed description, numerous specific details are set forth in order to provide a thorough understanding of the subject matter herein. However, it will be apparent to one of ordinary skill in the art that the subject matter may be practiced without these specific details. In other instances, well-known methods, procedures, components, and systems have not been described in detail so as not to unnecessarily obscure aspects of the embodiments.

It will also be understood that, although the terms first, second, *etc.* may be used herein to describe various elements, these elements should not be limited by these terms. These terms are only used to distinguish one element from another. For example, a first object or step could be termed a second object or step, and, similarly, a second object or step could be termed a first object or step. The first object or step, and the second object or step, are both objects or steps, respectively, but they are not to be considered the same object or step.

The terminology used in the description of the disclosure herein is for the purpose of describing particular embodiments only and is not intended to be limiting of the subject matter. As used in this description and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in response to detecting," depending on the context. Similarly, the phrase "if it is determined" or "if (a stated condition or event) is detected" may be construed to mean "upon determining" or "in response to determining" or "upon detecting (the stated condition or event)" or "in response to detecting (the stated condition or event)," depending on the context.

Specific details are given in the following description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, *etc.* When a process corresponds to a function, its termination corresponds to a return of the function to the calling function or the main function.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, *etc.* may be passed, forwarded, or transmitted via any suitable means including memory sharing, message passing, token passing, network transmission, *etc.*

As mentioned before, inversion, or full waveform inversion (FWI) of seismic data, provides a powerful mechanism for refining models (*e.g.* seismic velocity models) to resolve high-resolution structures. These subsurface structures may be used for many different purposes, *e.g.* to locate and identify gas or oil reservoirs. However, many models used in inversion or FWI contain complex bodies whose properties are significantly different from those of the surrounding medium which is represented by gridded models. The boundaries of these bodies form surfaces with complex topography that mark large, sharp contrasts in properties. These surfaces cause problems during inversion updates.

Embodiments of the present invention described in this disclosure provide for generating a 3-D gridded model suitable for finite difference modeling from a 3-D surface-based model representation, and they provide a linearization of the relationship between the two model types. This allows the gradient or sensitivity computed within the gridded model to be projected back to the original surface-based model. Model updates, including constrained updates to the position and geometry of surfaces, may then be computed within the original surface-based model representation.

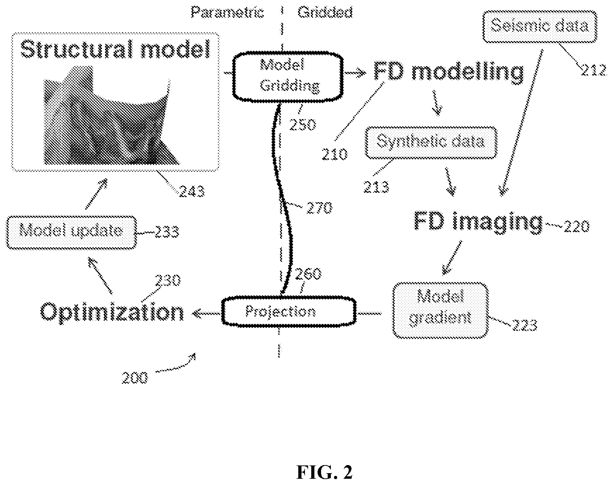

Figure 2 illustrates a workflow 200 according to one embodiment of the present invention as used in a seismic full waveform inversion process, in which a 3-D structural model is built to represent a 3-D subsurface structure. The right (gridded) half of the processing is very similar for this workflow 200 and prior art workflow 100 as illustrated in Figure 1. The FD modeling 210 creates synthetic data 213 which combines with real seismic data 212 and is fed to the FD imaging process 220. Model gradients 223 are generated from FD imaging process 220. However, the left (parametric) half of work flow 200 is very different. The model gradients 223 are not used directly in the optimization process 230. There is a projection process 260 before the optimization. The projection process 260 projects the model gradients from a gridded model to a structural model, which includes an explicit representation of the boundary surfaces that caused a lot of problems in the prior art workflow. The optimization 230 is done on the structural model and may include updates to surfaces, seismic properties, or both in the structural model. It generates a model update 233. With the model update 233, a new structural model 243 is ready to be used for the next iteration. Before the structural model 243 can be used in FD modeling, which uses gridded models, there is a model gridding or gridded model generating process 250, which generates a representation of the structural model within the cells of the gridded model. The projection process 260 and model gridding process 250 are two processes that provide linkages between the two different types of models: on the right hand side, the 3-D gridded models, and on the left hand side, the structural models, which include explicit surface models for the structural boundaries. The projection process 260 and the model gridding process 250 are connected by link 270, the linearization of the model gridding process 250, in which the results from one process are used in the other, as will be discussed below.

Not all processes shown in Figure 2 need to be used as described to obtain all the benefits of the present invention. By including the model gridding (250), projection (260) and model updates (233), and other common processes, an inversion workflow similar to the workflow 200 will have the benefits of increased stability, faster convergence and lower cost. There may be different ways to implement any processes.

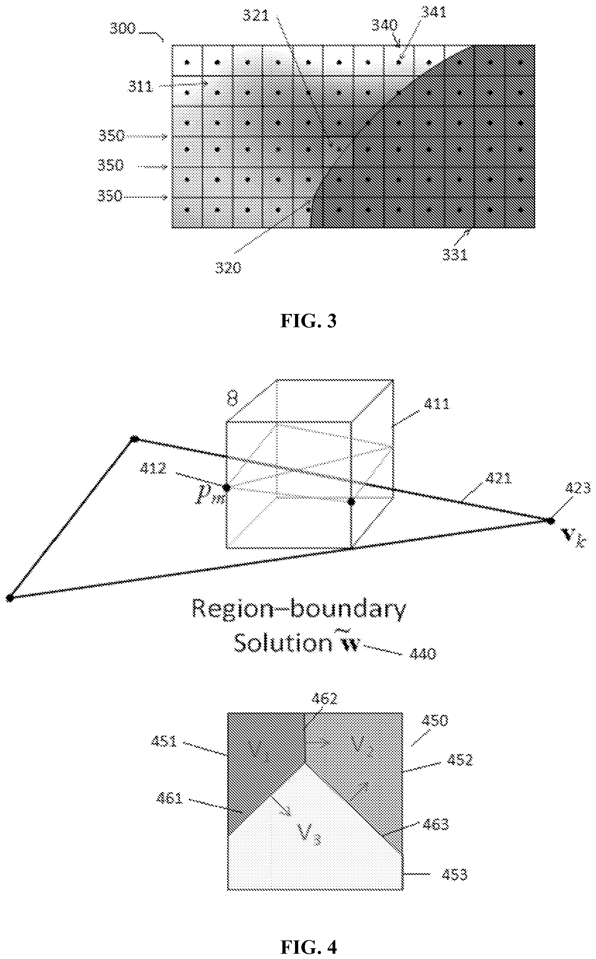

In embodiments of the present invention, geometrical analysis may vbe performed on surfaces that represent discontinuities in a model that is represented by cells in a gridded volume. Figure 3 illustrates a velocity model 300 of a gridded field with a surface 320. For simplicity, a 2-D version along the in-line and vertical plane is shown. The field is represented by a grid of Voronoi cells, *e.g.* 311, 321, 331. In an embodiment of the present invention, the grid of Voronoi cells centered on the location of each gridded model parameter is built. In this example, the gridded model parameter is the seismic velocity. Each Voronoi cell (*e.g.* 340) delimits the region within which points are closer to the given model parameter (341) than any other in the grid. The grid has cells (*e.g.* 311, 331) that are located in a smoothly varying field, and cells (*e.g.* 321) that intersect a surface 320 that separates two smoothly varying field regions. For parameters whose Voronoi cells (*e.g.* 311, 331) do not intersect a surface in the model, interpolation may be used to obtain an equivalent gridded model at the finite-difference modeling resolution, and then this process can be linearized. The gray shade levels of the grids represent the values of the original velocities in the structural model.

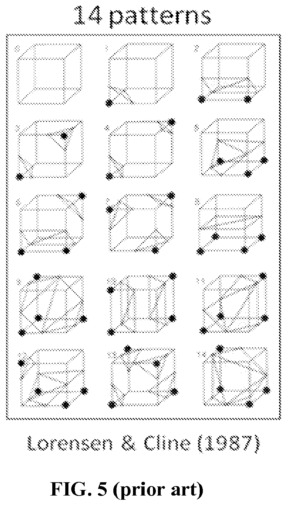

The boundary surface may be represented by a triangle mesh, which is typically used in computer graphics. Certain cases of the interaction between a triangular mesh and gridded representation of the media around it have been categorized by Lorensen & Cline as shown in Figure 5. Figure 5 illustrates the 14 patterns described by Lorensen & Cline. Figure 4 illustrates an example for pattern 8. A surface triangle 421, which represents a part of a boundary surface, intersects a volume cube 411, which represents a part of the gridded media. The intersection points $\mathbf{p_m}$ 412 are controlled by the vertices $\mathbf{v_k}$ 423, which bind the triangle into the surface mesh 421. The surface is represented by many of these mesh triangles 421. For each of the volume cubes 411, there is a region-boundary solution 440 which may be obtained using one of the 14 patterns shown in Figure 5. Figure 4 illustrates one sample solution where a cube 450 (shown in a 2-D version) is intersected by surfaces in three regions 451, 452 and 453. Each region (451, 452 or 453) occupies a volume within the cell (VI, V2 and V3) and each boundary (461, 462 and 463) has its own orientation (as indicated by the arrows 461, 462 and 463). These solutions may be tabulated into a lookup table and made available when needed, saving computational time.

In some embodiments of the present invention, the region-boundary solutions for gridded cells intersected by a boundary surface (*e.g.* 321) may be tabulated and a description of each cell obtained. The description/parameters of the cells may include some of the following:

(1) the number of regions (separated by surfaces) within the cell (for cell 321, there are two regions; for cell 450, there are three regions),

(2) the relative volume occupied by each region within the cell (*e.g.* VI, V2 and V3),

(3) a reference to the seismic property field within each region (*e.g.* seismic velocity),

(4) the number of boundaries between regions within the cell (for cell 321, there is one boundary; for cell 450, there are three boundaries),

(5) a reference to the two regions separated by each boundary (*e.g.* surface 461 separates regions 451 and 453),

(6) a normal vector specifying the local orientation of each boundary (*e.g.* each boundary 461, 462, 463 has its own normal vector), and

(7) differentials representing the linearization of (2) and (6) with respect to each contributing surface parameter.

This information, when combined with an equivalent medium theory, allows seismic parameters to be computed that define a homogeneous medium within the Voronoi cell that is equivalent to the mixture of media within the cell in the original velocity model. In an embodiment of this invention, the differential results (7) are combined with a linearization of the equivalent medium theory to provide a mechanism for projecting gradients or sensitivity functions from the gridded model representation to the surface-based representation, which may be used in the projection process 260 in the work flow 200.

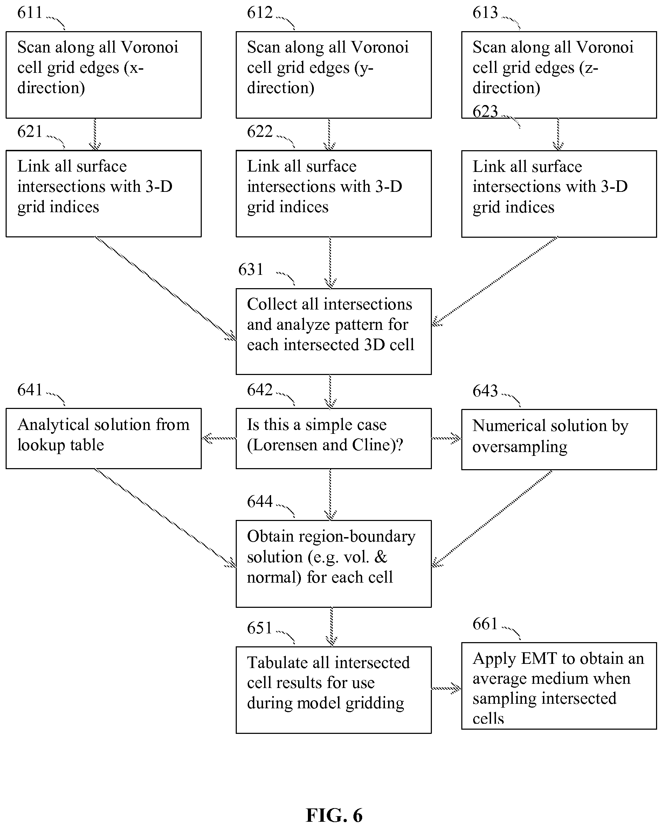

In one embodiment, the following procedure may be used to obtain cell descriptions for all cells intersected by surfaces, as illustrated in Figure 6:

1) Scan the full extent of the original model along the lines forming the edges of the Voronoi cells, once for each co-ordinate axis, *e.g.* the grid lines 350 in the in-line direction in Figure 3 (611, 612 and 613);

2) Identify the locations of any intersections between these lines and the surfaces in the original model (621, 622 and 623);

3) For each intersected Voronoi cell, collect together the intersection points for all cell edges from the three co-ordinate direction grids (631);

4) For each intersected Voronoi cell, determine whether or not the intersection pattern is a simple case consistent with the basic patterns described by Lorensen & Cline (1987) (642);

5) For these simple cases (641), obtain the cell analysis data (the region volumes and boundary normals described above) analytically by reducing the case to one of 14 patterns, as are known in computer graphics industry, and using lookup tables and the computed intersection points to estimate the relevant volumes, normal vectors and the linearization of both with respect to the intersection points;

6) For complex cases (643) involving multiple surfaces or layer pinch-outs within a cell, sample the cell interior on an $N^3$ grid to determine which region contains each point; the relative number of points in each region then provides an estimate of the relative volumes of regions within the cell and a best-fit plane algorithm provides the local normal vector for each boundary. The linearization for these cells may not easily be computed, but their contribution may be neglected since they typically form a very small proportion of the intersected cells;

7) For all cases, obtain the region-boundary solution for the cell (644);

8) Tabulate all interesting cell results for use during gridded model generation (651); and

9) Apply equivalent medium theory (EMT) to obtain an average medium when gridding intersected cells (661).

In one application of the process according to an embodiment of the present invention, the overwhelming majority of Voronoi cells in the grid are not intersected by surfaces, and the cost of evaluating the medium within these cells is therefore no greater than that of standard resampling methods. For the example shown in Figure 3, out of the 72 cells, 63 cells are in smooth varying region and 9 cells are intersected by the boundary surface 320. In typical 3-D applications of this process the proportion of intersected cells is much smaller than this. Of those that are intersected, the overwhelming majority form the simple cases described in (5) above, which are analyzed analytically and therefore extremely quickly. For the small proportion of cases, which are not included in the 14 patterns in Figure 5 and are described in (6) in the above, the analysis can be expensive, but the proportion of these cases is too small for this cost to become significant if a realistic value of $N$ is chosen.

Once the cell description specified above has been obtained for each Voronoi cell intersected by a surface, an equivalent medium averaging scheme is used to produce the seismic medium parameters that will be assigned to the cell. In the simplest application of this method, a volume-weighted average is applied to each seismic parameter used to describe the medium in the domain appropriate to the parameter (for example, the slowness or slowness-squared domain is used for velocity parameters). The method may also be combined with more sophisticated equivalent medium averaging techniques that account for the introduction of local anisotropy. This anisotropic effect is caused by the geometry of the seismic discontinuity within a cell, and has previously been described. Any method of this type that accounts for local anisotropy may need the boundary normals to be obtained in addition to the relative volumes for each intersected cell.

The equivalent medium in a simple intersected cell $\tilde{C}$ is a function of the media on either side of the boundaries, $\tilde{C}^0$ and $\tilde{C}^1$, and the region-boundary solution, $\tilde{W}$.

$$\tilde{C} = f\left(\tilde{C}^0, \tilde{C}^1, \tilde{w}\right)$$

(1)

The function $f(\ )$ describes the chosen equivalent medium theory. The region-boundary solution, $\tilde{W}$, is controlled by the positions of the cell edge intersection points, **p**, which are in turn determined by the positions of a set of $n$ local surface node vertices, ($v_k$, $k = 1$, $n$), as illustrated in Figure 4. The linearization of this system (i.e. the differential relationship between an equivalent medium parameter and a local surface node vertex component) can be expressed as,

$$\frac{\partial \tilde{C}_i}{\partial v_k^j} = \frac{\partial \tilde{C}_i}{\partial \tilde{w}_l} \frac{\partial \tilde{w}_l}{\partial p_m} \frac{\partial p_m}{\partial v_k^j}$$

Intersection

Cell geometry

Equivalent medium theory

(2)

where the three terms express the linearization of the equivalent medium theory, the cell geometry, and the intersection geometry respectively. The intersection geometry term is obtained from standard differential geometry. The equivalent medium theory term is obtained by linearizing the equivalent medium theory relationship. For the cell geometry term, a lookup table may be used to select the linearization of the solution from the appropriate case in the 14 basic patterns that were previously described by Lorensen & Cline (1987) in the algorithm known as "Marching Cubes" as illustrated in Figure 5. Therefore, each of the three right-hand-side terms can be obtained. Once each of them is obtained, the linearization of the system can be done.

The above method is readily available for implementation in a parallel computing environment. Each of the three phases (the initial Voronoi cell boundary scan, the cell analysis and the final gridding process) falls into the category of 'embarrassingly parallel' algorithms.

A method in accordance with an embodiment of the present invention may be used in the stabilization of FWI for models containing complex, high-contrast bodies, such as salt intrusions. A method in accordance with an embodiment of the present invention allows salt bodies to be represented and constrained explicitly (*e.g.* by a triangle mesh) to stabilize the gradient obtained from waveform matching. A method in accordance with an embodiment of the present invention also allows kinematic constraints from ray-based methods (*e.g.* common image point tomography) to be combined with waveform matching constraints to create a more stable hybrid inversion scheme.

In accordance with embodiments of the present invention, the link between gridded and structural model representations and its linearization can also be applied to other model types. For example, a structural resistivity model may be linked to a gridded resistivity model in a controlled source electromagnetic survey by this method. This allows a joint inversion to be performed in which different model types (*e.g.* seismic and electromagnetic models) are represented using a common structural model, which is manipulated directly during the inversion and constrained simultaneously by many data types (*e.g.* seismic and electromagnetic data).

Although most examples discussed above are related to seismic imaging, the methods according to the embodiments of the present invention are not limited to seismic imaging. The methods may be used in any model building or imaging processes that include inversion, for example, in electromagnetic survey inversion or imaging processes, ultrasound imaging processes, medical tomography processes, object scanning or imaging processes that are based on inversion of recorded data. The methods may be used in any imaging applications that use inversion to recover the structures of a target object in which the target object includes high contrast boundaries. The data are not limited to seismic (acoustic or pressure) data but can also be other data, such as electromagnetic data.

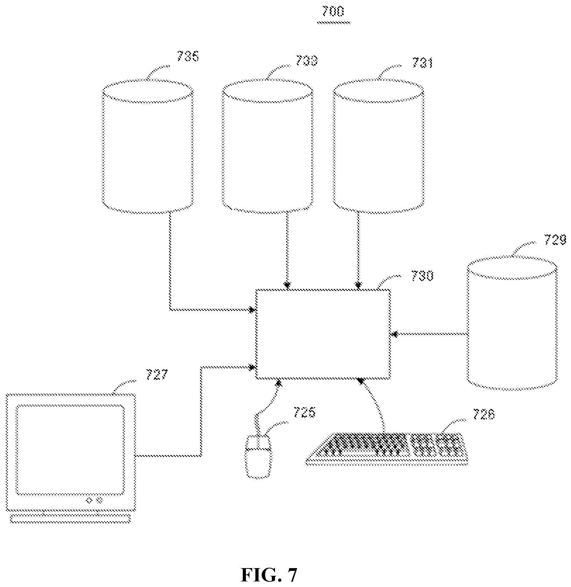

As those with skill in the art will understand, one or more of the steps of methods discussed above may be combined and/or the order of some operations may be changed. Further, some operations in methods may be combined with aspects of other example embodiments disclosed herein, and/or the order of some operations may be changed. The process of measurement, its interpretation, and actions taken by operators may be done in an iterative fashion; this concept is applicable to the methods discussed herein. Finally, portions of methods may be performed by any suitable techniques, including on an automated or semi-automated basis such as on computing system 700 in Figure 7.

Portions of methods described above may be implemented in a computer system 700, one of which is shown in Figure 7. The system computer 730 may be in communication with disk storage devices 729, 731, 733 and 735, which may be external hard disk storage devices and measurement sensors (not shown). It is contemplated that disk storage devices 729, 731, 733 and 735 are conventional hard disk drives, and as such, may be implemented by way of a local area network or by remote access. While disk storage devices are illustrated as separate devices, a single disk storage device may be used to store any and all of the program instructions, measurement data, and results as desired.

In one implementation, real-time data from the sensors may be stored in disk storage device 731. Various non-real-time data from different sources may be stored in disk storage device 733. The system computer 730 may retrieve the appropriate data from the disk storage devices 731 or 733 to process data according to program instructions that correspond to implementations of various techniques described herein. The program instructions may be written in a computer programming language, such as C++, Java and the like. The program instructions may be stored in a computer-readable medium, such as program disk storage device 735. Such computer-readable media may include computer storage media. Computer storage media may include volatile and non-volatile media, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the system computer 730. Combinations of any of the above may also be included within the scope of computer readable media.

In one implementation, the system computer 730 may present output primarily onto graphics display 727, or via printer 728 (not shown). The system computer 730 may store the results of the methods described above on disk storage 729, for later use and further analysis. The keyboard 726 and the pointing device (*e.g.,* a mouse, trackball, or the like) 725 may be provided with the system computer 730 to enable interactive operation.

The system computer 730 may be located on-site or at a data center remote from the field. The computer system 730 may be connected with other systems via network link 724 (not shown). The system computer 730 may be in communication with equipment on site to receive data of various measurements. Such data, after conventional formatting and other initial processing, may be stored by the system computer 730 as digital data in the disk storage 731 or 733 for subsequent retrieval and processing in the manner described above.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures.

**Claims**

1.  A computer-implemented method (200) for inversion of a 3-D property model in which a 3-D structural model (243) containing an explicit representation of boundary surfaces is built from an initial estimate of surface position and shape parameters to represent a 3-D structure, the method comprising:

    generating (250) a gridded model (210) from the initial estimate of surface position and shape parameters of the 3-D structural model (243), the generating (250) comprising identifying the locations of any intersections between a grid cell (311, 321, 331) and a surface (320), for each intersected grid cell (321) collecting intersection points for all cell edges, obtaining a region-boundary solution for a cell; inverting the 3-D property model by projecting (260) a gridded model gradient (223) obtained from finite difference imaging process (220) back to the initial estimate of surface position and shape parameters in the 3-D structural model (243); and
    computing an update (233) to the surface position and shape parameters in the 3-D structural model (243) (233).

2.  The method of claim 1, wherein the 3-D property model (233) inversion is a full waveform inversion process, a seismic inversion or imaging process, an electromagnetic survey inversion or imaging process, an ultrasound imaging process, medical tomography process, or an object scanning or imaging process based on inversion of recorded data.

3.  The method of claim 1, wherein obtaining the region-boundary solution for a cell comprises:

determining whether an intersection pattern is one of the 14 known patterns; and

if the intersection pattern is one of the 14 known patterns, using the corresponding solution.

4. The method of claim 1, wherein obtaining the region-boundary solution for a cell comprises sampling the cell interior with an $N^3$ grid and numerically determining a solution.

5. The method of claim 1, further comprising:

   tabulating cell properties for grid cells.

6. The method of claim 5, further comprising:

   applying equivalent medium theory to obtain an average medium when sampling intersected cells.

7. The method of claim 5, wherein the tabulated cell properties for grid cells comprise one or more of a number of regions within the cell, a relative volume occupied by each region within the cell, a reference to a property within each region within the cell, a number of boundaries between regions within the cell, a reference to two regions separated by each boundary, a normal vector of each boundary, or
   a linearization of the above properties.

8. The method of claim 7, wherein the reference to a property within each region within the cell is a reference to seismic velocity or density parameters.

9. The method of claim 1, further comprising:

   calculating a differential term from cell geometry using a linearization of the region-boundary solution.

10. The method of claim 1, further comprising:

    projecting (260) a gridded model gradient (223) obtained from inversion (220) back to the updated surface position and shape parameters in the 3-D structural model (243) (233), the projecting (260) comprising obtaining a differential, which is a product of three terms, one from equivalent medium theory, one from cell geometry and one from intersection geometry.

11. The method of claim 10, wherein obtaining a differential term from cell geometry comprises calculating the differential term from cell geometry using a linearization of a region-boundary solution.

12. The method of any of the preceding claims wherein the 3-D structure is a structure of an interior section of the earth's surface and the update to the surface position and shape parameters in the 3-D structural model is processed to generate an image of the structure of the interior section of the earth's surface.

13. A computer processing system for inversion of a 3-D property model in which a 3-D property model containing an explicit representation of boundary surfaces is built to represent a 3-D structure, the system comprising:

    a processor; and
    computer readable storage containing computer executable instructions which when executed by the processor, cause the processor to perform a method (200) as in any of claims 1-12.

14. The system of claim 13, wherein the computer executable instructions, when executed by the processor, further cause the processor to obtain a seismogram.

**Patentansprüche**

1. Computerimplementiertes Verfahren (200) zur Inversion eines 3D-Eigenschaftsmodells, bei dem ein eine explizite Darstellung von Grenzflächen enthaltendes 3D-Strukturmodell (243) aus einer anfänglichen Schätzung von Oberflächenpositions- und -formparametern aufgebaut wird, um eine 3D-Struktur darzustellen, wobei das Verfahren umfasst:

Erzeugen (250) eines gegitterten Modells (210) aus der anfänglichen Schätzung von Oberflächenpositions- und -formparametern des 3D-Strukturmodells (243), wobei das Erzeugen (250) umfasst, die Lagen von Schnittflächen zwischen einer Gitterzelle (311, 321, 331) und einer Oberfläche (320) für jede geschnittene Gitterzelle (321) zu identifizieren, Schnittpunkte für alle Zellenränder zu sammeln, eine Bereichsgrenzenlösung für eine Zelle zu ermitteln;

Invertieren des 3D-Eigenschaftsmodells durch Zurückprojizieren (260) eines aus einem Finite-Differenzen-Bilderzeugungsprozess (220) ermittelten Gittermodellgradienten (223) in die anfängliche Schätzung der Oberflächenpositions- und -formparameter im 3D-Strukturmodell (243);

und

Berechnen einer Aktualisierung (233) der Oberflächenpositions- und -formparameter im 3D-Strukturmodell (243) (233).

2. Verfahren nach Anspruch 1, wobei die 3D-Eigenschaftsmodell-(233)-Inversion ein Full-Waveform-Inversionsprozess, ein seismischer Inversions- oder Bilderzeugungsprozess, ein elektromagnetischer Vermessungsinversions- oder -bilderzeugungsprozess, ein Ultraschallbilderzeugungsprozess, ein Medizinische-Tomographie-Prozess oder ein Objektabtastungs- oder -bilderzeugungsprozess auf der Basis einer Inversion aufgezeichneter Daten ist.

3. Verfahren nach Anspruch 1, wobei das Ermitteln der Bereichsgrenzenlösung für eine Zelle umfasst:

Bestimmen, ob es sich bei einem Schnittflächenmuster um eines der 14 bekannten Muster handelt; und

falls es sich bei dem Schnittflächenmuster um eines der 14 bekannten Muster handelt, Verwenden der entsprechenden Lösung.

4. Verfahren nach Anspruch 1, wobei das Ermitteln der Bereichsgrenzenlösung für eine Zelle ein Samplen des Zellinneren mit einem Gitter $N^3$ und ein numerisches Bestimmen einer Lösung umfasst.

5. Verfahren nach Anspruch 1, das ferner umfasst:

Tabellieren von Zelleneigenschaften für Gitterzellen.

6. Verfahren nach Anspruch 5, das ferner umfasst:

Anwenden der *Equivalent-Medium*-Theorie, um beim Samplen geschnittener Zellen ein Durchschnittsmedium zu ermitteln.

7. Verfahren nach Anspruch 5, wobei die tabellierten Zelleneigenschaften für Gitterzellen eines oder mehreres umfassen von mehreren Bereichen innerhalb der Zelle, einem jeweils von den Bereichen innerhalb der Zelle eingenommenen relativen Volumen, einem Verweis auf eine jeweilige Eigenschaft innerhalb der Bereiche innerhalb einer Zelle, mehreren Grenzen zwischen Bereichen innerhalb der Zelle, einem Verweis auf zwei durch eine Grenze voneinander getrennte Bereiche, einem Normalvektor jeder Grenze, oder

einer Linearisierung der genannten Eigenschaften.

8. Verfahren nach Anspruch 7, wobei der Verweis auf eine jeweilige Eigenschaft innerhalb der Bereiche innerhalb der Zelle ein Verweis auf seismische Geschwindigkeits- oder Dichteparameter ist.

9. Verfahren nach Anspruch 1, das ferner umfasst:

Berechnen eines Differentialgliedes aus der Zellengeometrie unter Verwendung einer Linearisierung der Bereichsgrenzenlösung.

10. Verfahren nach Anspruch 1, das ferner umfasst:

Zurückprojizieren (260) eines aus der Inversion (220) ermittelten Gittermodellgradienten (223) in die aktualisierten Oberflächenpositions- und -formparameter im 3D-Strukturmodell (243) (233), wobei das Projizieren (260) umfasst, eine Ableitung zu ermitteln, bei der es sich um ein Produkt aus drei Gliedern, einem aus der *Equivalent-Medium*-Theorie, einem aus der Zellengeometrie und einem aus der Schnittflächengeometrie, handelt.

**11.** Verfahren nach Anspruch 10, wobei das Ermitteln eines Differentialgliedes aus der Zellengeometrie umfasst, das Differentialglied aus der Zellengeometrie unter Verwendung einer Linearisierung einer Bereichsgrenzenlösung zu berechnen.

**12.** Verfahren nach einem der vorhergehenden Ansprüche, wobei die 3D-Struktur eine Struktur eines inneren Abschnitts der Erdoberfläche ist und die Aktualisierung auf die Oberflächenpositions- und -formparameter im 3D-Strukturmodell verarbeitet wird, um eine bildliche Darstellung der Struktur des inneren Abschnitts der Erdoberfläche zu erzeugen.

**13.** Computerverarbeitungssystem zur Inversion eines 3D-Eigenschaftsmodells, bei dem ein eine explizite Darstellung von Grenzflächen enthaltendes 3D-Eigenschaftsmodell aufgebaut wird, um eine 3D-Struktur darzustellen, wobei das System umfasst:

einen Prozessor; und
einen computerlesbaren Speicher, der computerausführbare Befehle enthält, die, wenn sie vom Prozessor ausgeführt werden, bewirken, dass der Prozessor ein Verfahren (200) nach einem der Ansprüche 1-12 durchführt.

**14.** System nach Anspruch 13, wobei die computerausführbaren Befehle, wenn sie vom Prozessor ausgeführt werden, ferner bewirken, dass der Prozessor ein Seismogramm ermittelt.

**Revendications**

**1.** Procédé mis en oeuvre par ordinateur (200) pour l'inversion d'un modèle de propriétés 3-D, dans lequel un modèle structural 3-D (243) contenant une représentation explicite de surfaces limites est construit à partir d'une estimation initiale des paramètres de forme et de position de surface pour représenter une structure 3D, le procédé comprenant :
la génération (250) d'un modèle maillé (210) à partir de l'estimation initiale des paramètres de forme et de position surface du modèle structural 3-D (243), ladite génération (250) comprenant l'identification des emplacements de toutes intersections entre une cellule du maillage (311, 321, 331) et une surface (320), pour chaque cellule entrecroisée (321) la collecte des points d'intersection pour toutes les arrêtes de cellules, et l'obtention d'une solution frontière-région pour une cellule ;
l'inversion du modèle de propriétés 3-D par projection (260) d'un gradient de modèle maillé (223) obtenu à partir du procédé d'imagerie par différences finies (220) ramenant à l'estimation initiale des paramètres de forme et de position de surface dans le modèle structural 3D (243) ; et
le calcul d'une mise à jour (233) des paramètres de forme et de position de surface dans le modèle structural 3-D (243) (233).

**2.** Le procédé selon la revendication 1, dans lequel l'inversion du modèle de propriétés 3-D (233) est un procédé d'inversion de forme d'onde complète, un procédé d'inversion ou d'imagerie sismique, un procédé d'imagerie électromagnétique, un procédé d'inversion ou d'imagerie de levés, un procédé d'imagerie ultrasonique, un procédé de tomographie médicale ou un procédé d'imagerie ou de balayage d'objet, sur la base de l'inversion des données enregistrées.

**3.** Le procédé selon la revendication 1, dans lequel l'obtention de la solution frontière-région pour une cellule consiste à :

déterminer si une configuration des intersections est l'une des 14 configurations connues ; et
si la configuration des intersections est l'une des 14 configurations connues, au moyen de la solution correspondante.

**4.** Le procédé selon la revendication 1, dans lequel l'obtention de la solution frontière-région pour une cellule comprend l'échantillonnage de l'intérieur de la cellule avec une grille $N^3$ et la détermination numérique d'une solution.

**5.** Le procédé selon la revendication 1, consistant en outre à :

tabuler les propriétés des cellules pour les cellules du maillage.

**6.** Le procédé selon la revendication 5, consistant en outre à :

appliquer la théorie di milieu équivalent pour obtenir un milieu moyen lors de l'échantillonnage des cellules entrecroisées.

7. Le procédé selon la revendication 5, dans lequel :les propriétés tabulées des cellules pour les cellules du maillage comprennent une ou plus d'un nombre de régions à l'intérieur de la cellule, un volume relatif occupé par chaque région à l'intérieur de la cellule, une référence à une propriété à l'intérieur de chaque région à l'intérieur de la cellule, un "nombre de frontières entre les régions à l'intérieur de la cellule, une référence à deux régions séparées par chaque frontière, un vecteur normal de chaque frontière, ou
une linéarisation des propriétés susmentionnées.

8. Le procédé selon la revendication 7, dans lequel :la référence à une propriété à l'intérieur de chaque région est une référence aux paramètres de densité ou de vitesse sismique.

9. Le procédé selon la revendication 1, consistant en outre à :

   calculer un terme différentiel à partir de la géométrie des cellules au moyen de la linéarisation de la solution frontière-région.

10. Le procédé selon la revendication 1, consistant en outre à :

    la projection (260) d'un gradient de modèle maillé (223) obtenu de l'inversion i (220) ramenant aux paramètres de forme et de position de surface dans le modèle structural 3-D (243) (233), la projection (260) comprenant l'obtention d'un différentiel, qui est un produit de trois termes, un provenant de la théorie du milieu équivalent, un de la géométrie des cellules et un de la géométrie des intersections.

11. Le procédé selon la revendication 10, dans lequel l'obtention d'un différentiel de la géométrie des cellules comprend le calcul du terme différentiel de la géométrie des cellules au moyen d'une linéarisation d'une solution frontière-région.

12. Le procédé selon l'une quelconque des revendications précédentes, dans lequel la structure 3-D est une structure d'une section intérieure de la surface de la terre et la mise à jour des paramètres de forme et de position de surface dans le modèle structural 3-D est traité de façon à générer une image de la structure de la section intérieure de la surface de la terre.

13. Système de traitement informatique pour l'inversion d'un modèle de propriétés 3-D, dans lequel un modèle structural 3-D contenant une représentation explicite de surfaces limites est construit pour représenter une structure 3D, le système comprenant :

    un processeur ; et
    une unité de stockage lisible par ordinateur, contenant des instructions exécutables par ordinateur qui, lors de leur exécution par le processeur, font que le processeur effectue un procédé (200) décrit dans l'une quelconque des revendications 1 à 12.

14. Le système selon la revendication 13, dans lequel les instructions exécutables par ordinateur, lors de leur exécution par le processeur, entraîne en outre l'obtention d'un sismogramme.

**FIG. 1 (Prior art)**

**FIG. 2**

**FIG. 3**

Region-boundary
Solution $\tilde{\mathbf{w}}$ —— 440

**FIG. 4**

FIG. 5 (prior art)

611
Scan along all Voronoi cell grid edges (x-direction)

612
Scan along all Voronoi cell grid edges (y-direction)

613
Scan along all Voronoi cell grid edges (z-direction)
623

621
Link all surface intersections with 3-D grid indices

622
Link all surface intersections with 3-D grid indices

Link all surface intersections with 3-D grid indices

631
Collect all intersections and analyze pattern for each intersected 3D cell

641
Analytical solution from lookup table

642
Is this a simple case (Lorensen and Cline)?

643
Numerical solution by oversampling

644
Obtain region-boundary solution (e.g. vol. & normal) for each cell

651
Tabulate all intersected cell results for use during model gridding

661
Apply EMT to obtain an average medium when sampling intersected cells

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VIGH D et al.** 3D prestack plane-wave, full-waveform inversion. *Geophysics,* 2008, vol. 73 (5), VE135-VE144

- *Lorensen & Cline,* 1987